(19) Europäisches Patentamt
European Patent Office
Office européen des brevets

(11) **EP 4 080 773 A1**

(12) **EUROPÄISCHE PATENTANMELDUNG**

(43) Veröffentlichungstag:
**26.10.2022 Patentblatt 2022/43**

(21) Anmeldenummer: **21169233.0**

(22) Anmeldetag: **19.04.2021**

(51) Internationale Patentklassifikation (IPC):
**H04B 1/00** *(2006.01)* **H01P 1/213** *(2006.01)*

(52) Gemeinsame Patentklassifikation (CPC):
**H01P 1/2135; H01P 1/2138; H04B 1/0057**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Hofmann, Andreas**
**1140 Wien (AT)**
• **Resel, Leopold**
**1030 Wien (AT)**
• **Demmer, Andreas**
**1210 Wien (AT)**

(74) Vertreter: **Maier, Daniel Oliver**
**Siemens AG**
**Postfach 22 16 34**
**80506 München (DE)**

(54) **HOCHFREQUENZ-FILTER**

(57) Hochfrequenz-Filter, umfassend zumindest einen ersten Signal-Eingang (IN1) zum Empfang zumindest eines ersten Signals (S1), einen zweiten Signal-Eingang (IN2) zum Empfang eines zweiten Signals (S2) und zumindest einen dritten Signal-Eingang (IN3, IN4) zum Empfang zumindest eines dritten Signals (S3, S4),
und zumindest ein erstes Bandpassfilter (BPF1) zum Filtern des zumindest einen ersten Signals (S1), und ein zweites Bandpassfilter (BPF2) zum Filtern des zweiten Signals (S2), und zumindest ein drittes Bandpassfilter (BPF1, BPF4) zum Filtern des zumindest einen dritten Signals (S3, S4), und das zweite Bandpassfilter (BPF2) in dessen Übertragungsfunktion eine Flankensteilheit im Sperrbereich aufweist, die zumindest doppelt so hoch ist, wie die Flankensteilheit im Sperrbereich in der Übertragungsfunktion des zumindest einen ersten und des zumindest einen dritten Bandpassfilters (BPF1, BPF3), und zumindest eine erste Kombiniereinheit (C1) zum Kombinieren des gefilterten zumindest einen ersten und des zweiten Signals (S1f, S2f) zu einem ersten kombinierten Signal (SC1), und zumindest eine Summen-Kombiniereinheit (CS) zum Kombinieren des ersten kombinierten Signals (SC1) und des gefilterten zumindest einen dritten Signals (S3f, S4f) zu einem Summensignal (SC).

FIG 1

EP 4 080 773 A1

**Beschreibung**

Die Erfindung betrifft ein Hochfrequenz-Filter.

Nach wie vor kann der Entwurf von Hochfrequenzfiltern für spezifische Anwendungen hohe Anforderungen an deren Übertragungsfunktionen stellen.

Insbesondere in der Luftfahrt gibt es Anwendungen mit mehreren Frequenzbändern, welche aus Sicherheitserfordernissen sehr kritisch klassifiziert werden. Besonders herausfordernd können dabei dicht aneinandergrenzende Frequenzbänder mit hoher Flankensteilheit in der Übertragungsfunktion sein.

Der Einsatz von Filtern in Komponentenbauweise kann Filter hoher Güte bereitstellen, jedoch ist ein derartiges Filter oft schwer, voluminös und teuer.

Demgegenüber stehen oft planare Filter, welche kleiner, leichter und kostengünstiger sein können.

Es ist Aufgabe der Erfindung ein Hochfrequenzfilter mit mehreren Frequenzbereichen bereitzustellen, welches eine vorteilhafte Kombination aus geringem Gewicht und kleinem Volumen aufweist und zudem auch leicht herzustellen ist.

Die erfindungsgemäße Aufgabe wird durch ein Hochfrequenzfilter gelöst, umfassend

zumindest einen ersten Signal-Eingang zum Empfang zumindest eines ersten Signals mit zumindest einer ersten Frequenz, einen zweiten Signal-Eingang zum Empfang eines zweiten Signals mit einer zweiten Frequenz, und zumindest einen dritten Signal-Eingang zum Empfang zumindest eines dritten Signals mit zumindest einer dritten Frequenz, wobei die zumindest eine erste Frequenz kleiner als die zweite Frequenz ist, und die zweite Frequenz kleiner als die zumindest eine dritte Frequenz ist,

und zumindest ein erstes Bandpassfilter (BPF1) zum Filtern des zumindest einen ersten Signals (S1), wobei zumindest ein gefiltertes erstes Signal (Slf) geformt wird, und ein zweites Bandpassfilter (BPF2) zum Filtern des zweiten Signals (S2), wobei ein gefiltertes zweites Signal (S2f) geformt wird, und zumindest ein drittes Bandpassfilter (BPF1, BPF4) zum Filtern des zumindest einen dritten Signals (S3, S4), wobei zumindest ein gefiltertes drittes Signal (S3f, S4f) geformt wird, und das zweite Bandpassfilter in dessen Übertragungsfunktion eine Flankensteilheit im Sperrbereich aufweist, die zumindest doppelt so hoch ist, wie die Flankensteilheit im Sperrbereich in der Übertragungsfunktion des zumindest einen erstes und dritten Bandpassfilters, und

zumindest eine erste Kombiniereinheit zum Kombinieren des gefilterten zumindest einen ersten und zweiten Signals zu einem ersten kombinierten Signal, wobei die zumindest eine erste Kombiniereinheit ferner dazu eingerichtet ist, eine Tiefpassfilterung mit einer Durchlassfrequenz, welche die zumindest eine erste Frequenz umfasst, für das gefilterte zumindest eine erste Signal und eine Hochpassfilterung mit einer Durchlassfrequenz, welche die zweite Frequenz umfasst, des gefilterten zweiten Signals durchzuführen, und

zumindest eine weitere Summen-Kombiniereinheit zum Kombinieren des ersten kombinierten Signals und des gefilterten zumindest einen dritten Signals zu einem Summensignal), welches an einen Summen-Signalausgang geführt ist.

Die erfindungsgemäße Anordnung von Bandpassfiltern und Kombinierern erlaubt eine besonders günstige Realisierung des Filters für die gewählte Parameterkombination und führt zu einem synergistischen Vorteil für die Bauart des Filters.

Durch die gewählte Kombination der Filter und Kombinierer ist es möglich, eine Gleichspannungskopplung zwischen dem zumindest einen ersten Signal S1 und dem Summen-Signalausgang zu erreichen, was für einige Anwendungen, insbesondere in der Luftfahrt, ein wichtiges Kriterium zur Vereinfachung des Avionik-Systems darstellt.

Es ist klar, dass bei weiteren dritten Signalen beispielswiese eine weitere Kombiniereinheit in den Signalpfad eingesetzt werden kann, um die weiteren dritten Signale geeignet der Summen-Kombiniereinheit zuzuführen. Optional können die verwendeten Kombiniereinheiten zusätzlich eine frequenzselektive Filterfunktion aufweisen.

In einer Weiterbildung der Erfindung ist es vorgesehen, dass zwischen dem zumindest einen ersten Bandpassfilter und dem zumindest einen dritten Bandpassfilter eine elektromagnetische Kopplung vorliegt.

Eine derartige Kopplung stellt daher nicht nur eine reine Zusammenschaltung von einzelnen Bandpass-Filtern in jeweils getrennten Signalpfaden dar, sondern erzielt eine synergistische Gesamtfilterwirkung, da die einzelnen Signalpfade beziehungsweise die Bandpassfilter untereinander elektromagnetisch gekoppelt sind.

Erst durch die Berücksichtigung dieser Kopplung kann eine Reduktion des Bauraumes und des Gewichts erreicht werden.

Dies macht sich dadurch bemerkbar, dass ein Bandpassfilter gemeinsam, also unter Berücksichtigung des jeweils anderen Bandpassfilters entworfen ist.

In einer Weiterbildung der Erfindung ist es vorgesehen, dass das zumindest eine erste Filter und das zumindest eine dritte Filter jeweils ein planares Filter sind, und das zweite Filter ein Cavity-Filter ist.

Durch diese Kombination sind ein geringes Gewicht und ein kleiner Bauraum für das Filter realisierbar.

In einer Weiterbildung der Erfindung ist es vorgesehen, dass das zumindest eine erste Filter und das zumindest eine dritte Filter auf demselben Schaltungsträger angeordnet sind.

Durch diese Kombination sind ein geringes Gewicht und ein kleiner Bauraum für das Filter realisierbar.

In einer Weiterbildung der Erfindung ist es vorgesehen, dass die zweite Frequenz 40% - 60% der zumindest einen dritten Frequenz umfasst, bevorzugt 50%.

Insbesondere eine solche Einschränkung bei der Parameterwahl führt die zuvor genannte Architektur des Filters zu einem geringen Gewicht und zu einem kleinen Bauraum.

Die Aufgabe wird auch durch eine Verwendung des erfindungsgemäßen Filters in einer Luftfahrt-Funkeinrichtung gelöst.

In einer Weiterbildung der Erfindung ist es vorgesehen, dass das Filter Funkeinrichtungen für Luftfahrt-Kommunikation sowie Satellitennavigation und zumindest eine Einrichtung zum instrumentierten Fliegen miteinander kombiniert.

Die Erfindung wird nachfolgend anhand eines in den beigeschlossenen Zeichnungen dargestellten Ausführungsbeispiels näher erläutert. In den Zeichnungen zeigt:

Fig. 1    ein Blockschaltbild eines erfindungsgemäßen Filters,

Fig. 2    Übertragungsfunktion des Filters nach Fig. 1,

Fig. 3    Übertragungsfunktionen zweier Signalpfade des Filters nach Fig. 1,

Fig. 4    Übertragungsfunktionen dreier Signalpfade des Filters nach Fig. 1,

Fig. 5    simulierte Übertragungsfunktionen von Signalpfaden des Filters nach Fig. 1,

Fig. 6    gemessene Übertragungsfunktionen von Signalpfaden des Filters nach Fig. 1,

Fig. 7    eine Aufsicht einer Leiterplatte mit Teilen des Filters nach Fig. 1.

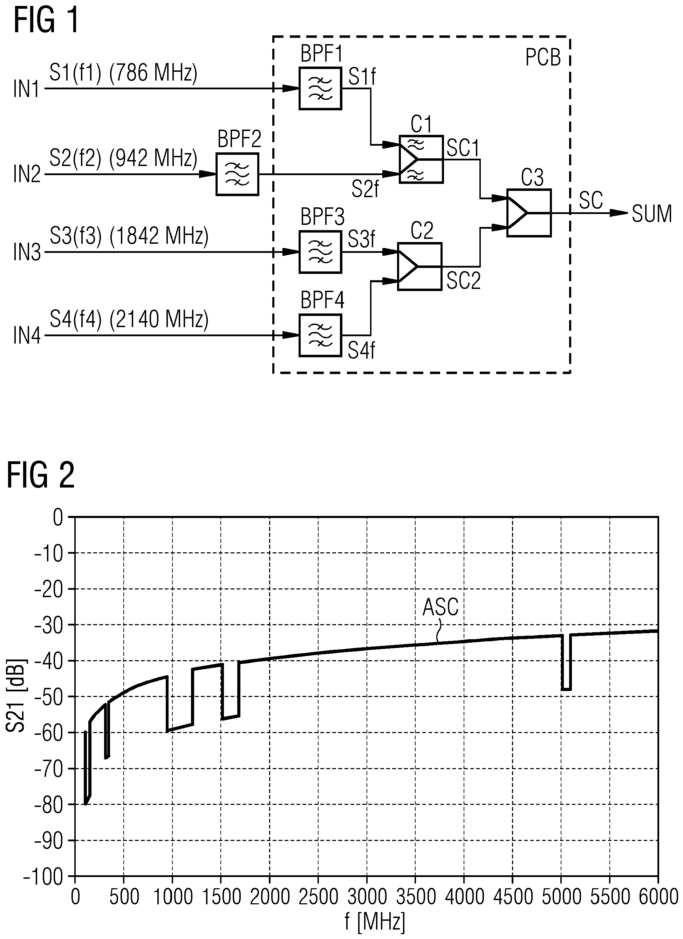

In Fig. 1 ist ein Blockschaltbild eines erfindungsgemäßen Filters für eine Anwendung im Luftfahrtbereich dargestellt, welche durch die Norm DO160 ("Environmental Conditions and Test Procedures for Airborne Equipment") beschrieben werden.

Die Übertragungsfunktion dieses Filters weist Durchlassbereiche in folgenden Frequenzbereichen F1-F4 auf:

- $$F1 = 728\text{MHz} - 844\text{MHz}$$

- $$F2 = 925\text{MHz} - 960\text{MHz}$$

- $$F3 = 1805\text{MHz} - 1880\text{MHz}$$

- $$F4 = 2110\text{MHz} - 2170\text{MHz}$$

Die Frequenzbereiche F1-F4 sind insbesondere zur Unterdrückung von Mobilfunkfrequenzen beispielsweise zur Entkopplung eines Satellitennavigations-Systems vorgesehen.

Ein gefiltertes erstes Signal S1f(f) wird mithilfe eines ersten Bandpassfilters BPF1 aus dem ersten Signal S1(f) gebildet und einem ersten Signal-Kombinierer C1 zugeführt.

Ein gefiltertes zweites Signal S2f(f) wird mithilfe eines zweiten Bandpassfilters BPF2 aus dem zweiten Signal S2(f) gebildet und dem ersten Signal-Kombinierer C1 zugeführt.

Der erste Signal-Kombinierer C1 führt das erste und zweite gefilterte Signal S1f(f) und S2f(f) zu einem ersten kombinierten Signal SC1 zusammen

Ein gefiltertes drittes Signal S3f(f) wird mithilfe eines dritten Bandpassfilters BPF3 aus dem dritten Signal S3(f) gebildet und einem zweiten Signal-Kombinierer C2 zugeführt.

Ein gefiltertes viertes Signal S4f(f) wird mithilfe eines vierten Bandpassfilters BPF4 aus dem vierten Signal S3(f) gebildet und dem zweiten Signal-Kombinierer C2 zugeführt.

Der zweite Signal-Kombinierer C2 führt das dritte und vierte gefilterte Signal S3f(f) und S4f(f) zu einem zweiten kombinierten Signal SC2 zusammen.

Das erste und das zweite kombinierte Signal SC1, SC2 werden einem weiteren Summen-Signal-Kombinierer CS zugeführt, welcher aus Beiden das Summen-Signal SC bildet.

Das erste, dritte und vierte Bandpassfilter BPF1, BPF3, BPF4 sind auf einer gemeinsamen Leiterplatte PCB angeordnet, auf welcher auch der erste, der zweite und der Summen-Signal-Kombinierer C1, C2, CS angeordnet sind.

Die Komponenten BPF1, BPF3, BPF4 und C1, C2, CS auf der Leiterplatte PCB sind in planarer Technologie ausgeführt, wie beispielsweise in Streifenleitungstechnologie.

Das zweite Bandpassfilter BPF2 ist als separates Bauteil ausgeführt, vorzugsweise in Form eines Hohlraumresonators, welcher auf der Leiterplatte PCB verlötet sein kann.

Mit anderen Worten umfasst das Hochfrequenz-Filter folgende Merkmale:

- einen ersten Signal-Eingang IN1 zum Empfang eines ersten Signals S1 mit einer ersten Frequenz f1,

- einen zweiten Signal-Eingang IN2 zum Empfang eines zweiten Signals S2 mit einer zweiten Frequenz f2,

- einen dritten Signal-Eingang IN3 zum Empfang eines dritten Signals S3 mit einer dritten Frequenz f3,

- einen vierten Signal-Eingang IN4 zum Empfang eines vierten Signals S4 mit einer vierten Frequenz f4,

- ein erstes Bandpassfilter BPF1 zum Filtern des ersten Signals S1, wobei ein gefiltertes erstes Signals S1f geformt wird,

- ein zweites Bandpassfilter BPF2 zum Filtern des zweiten Signals S2, wobei ein gefiltertes zweites Signal S2f geformt wird,

- ein drittes Bandpassfilter BPF3 zum Filtern des dritten Signals S3, wobei ein gefiltertes drittes Signal S3f geformt wird,

- ein viertes Bandpassfilter BPF4 zum Filtern des viertes Signals S4, wobei ein gefiltertes viertes Signal S4f geformt wird,

- eine erste Kombiniereinheit C1 zum Kombinieren des gefilterten ersten und zweiten Signals S1f, S2f zu einem ersten kombinierten Signal SC1, und

- eine zweite Kombiniereinheit C2 zum Kombinieren des gefilterten dritten und vierten Signals S3f, S4f zu einem zweiten kombinierten Signal SC2, und

- eine weitere Summen-Kombiniereinheit CS zum Kombinieren des ersten und zweiten kombinierten Signals SC1, SC2 zu einem Summensignal SC, welches an einen Summen-Signalausgang SUM geführt ist.

Die zweite Frequenz f2 ist zwischen der ersten Frequenz f1 und der dritten Frequenz f3 gelegen ist.

Das zweite Bandpassfilter BPF2 weist in dessen Übertragungsfunktion eine Flankensteilheit im Sperrbereich auf, die zumindest doppelt so hoch ist, wie die Flankensteilheit im Sperrbereich in der Übertragungsfunktion des ersten und dritten Bandpassfilters BPF1, BPF3.

Die erste Kombiniereinheit C1 ist ferner dazu eingerichtet, eine Tiefpassfilterung mit einer Durchlassfrequenz, welche die erste Frequenz umfasst, für das gefilterte erste Signal S1f durchzuführen.

Die erste Kombiniereinheit C1 ist ferner dazu eingerichtet, eine Hochpassfilterung mit einer Durchlassfrequenz, welche die zweite Frequenz umfasst, für das gefilterte zweite Signal S2f durchzuführen.

Die zweite Kombiniereinheit C2 und/oder die Summen-Kombiniereinheit CS können optional auch eine frequenzselektive Filterfunktion aufweisen.

Das erste Filter BPF1, das dritte Filter BPF3 und das vierte Filter BPF4 sind auf demselben Schaltungsträger PCB angeordnet.

Zwischen der Struktur des ersten Bandpassfilters BPF1, des dritten Bandpassfilters BPF3 und des vierten Bandpassfilters BPF4 liegt eine elektromagnetische Kopplung vor, sodass eine gemeinsame Struktur auf dem Schaltungsträger PCB gebildet ist.

Das erste Filter BPF1 und das dritte Filter BPF3 und das vierte Filter BPF4 sind jeweils planare Filter auf Basis des "stepped-impedance" Konzepts.

Das zweite Filter BPF2 ist ein Cavity-Filter.

Die zweite Frequenz f2 umfasst 40% - 60% der dritten Frequenz f3, bevorzugt 50%.

Fig. 2 zeigt eine graphische Darstellung mit der Übertragungsfunktion des erfindungsgemäßen Filters.

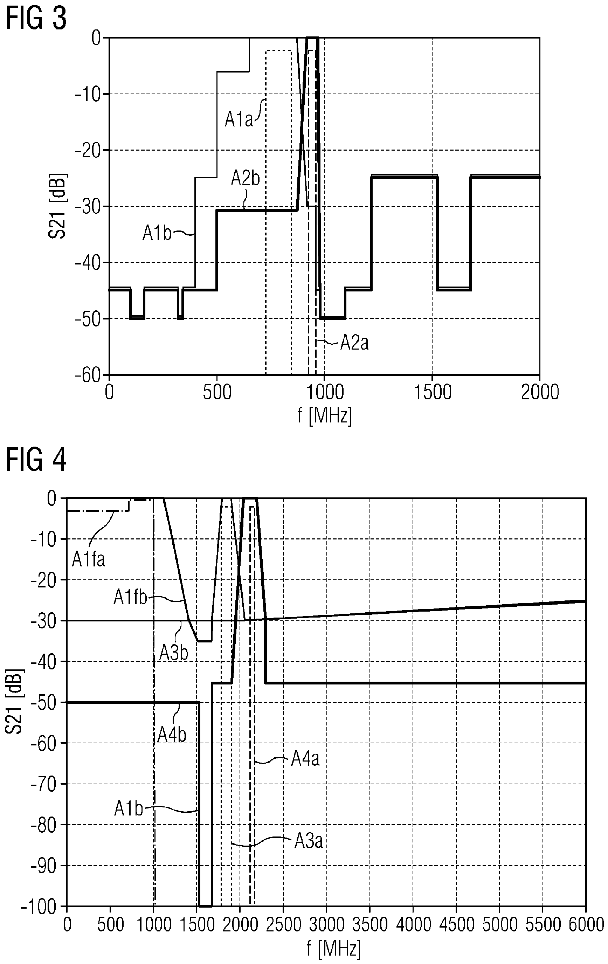

Fig. 3 stellt Übertragungsfunktionen zweier Signalpfade des erfindungsgemäßen Filters dar.

Eine erste Definitionsfunktion A1a zeigt eine Grenzwertfunktion der erforderlichen Dämpfung eines Filters nach der Norm DO160 für das erste Signal S1.

Eine erste Übertragungsfunktion A1b zeigt eine von der ersten Definitionsfunktion A1a abgeleitete erste Filterfunktion, welche als Grundlage eines Filterdesigns dient.

Eine zweite Definitionsfunktion A2a zeigt eine Grenzwertfunktion der erforderlichen Dämpfung eines Filters nach der Norm DO160 für das zweite Signal S2.

Eine zweite Übertragungsfunktion A2b zeigt eine von der zweiten Definitionsfunktion A2a abgeleitete zweite Filterfunktion, welche als Grundlage des Filterdesigns dient.

Fig. 4 stellt Übertragungsfunktionen zweier Signalpfade des erfindungsgemäßen Filters dar.

Eine dritte Definitionsfunktion A3a zeigt eine Grenzwertfunktion der erforderlichen Dämpfung eines Filters nach der Norm DO160 für das dritte Signal S3.

Eine dritte Übertragungsfunktion A3b zeigt eine von der dritten Definitionsfunktion A3a abgeleitete dritte Filterfunktion, welche als Grundlage des Filterdesigns dient.

Eine vierte Definitionsfunktion A4a zeigt eine Grenzwertfunktion der erforderlichen Dämpfung eines Filters nach der Norm DO160 für das vierte Signal S4.

Eine vierte Übertragungsfunktion A1b zeigt eine von der vierten Definitionsfunktion A1a abgeleitete vierte Filterfunktion, welche als Grundlage des Filterdesigns dient.

Eine Kombinations-Definitionsfunktion Alfa zeigt eine Grenzwertfunktion der erforderlichen Dämpfung eines Filters nach der Norm DO160 für das kombinierte Signal SC1, wobei dabei die erste und zweite Definitionsfunktion A1a, A2a kombiniert sind.

Eine Kombinations-Übertragungsfunktion A1fb zeigt eine von der Kombinations-Definitionsfunktion Alfa abgeleitete Kombinations-Filterfunktion in Form eines Tiefpass-Filters, wobei dabei die erste und zweite Übertragungsfunktion A1b, A2b kombiniert sind, welche als Grundlage des Filterdesigns dient.

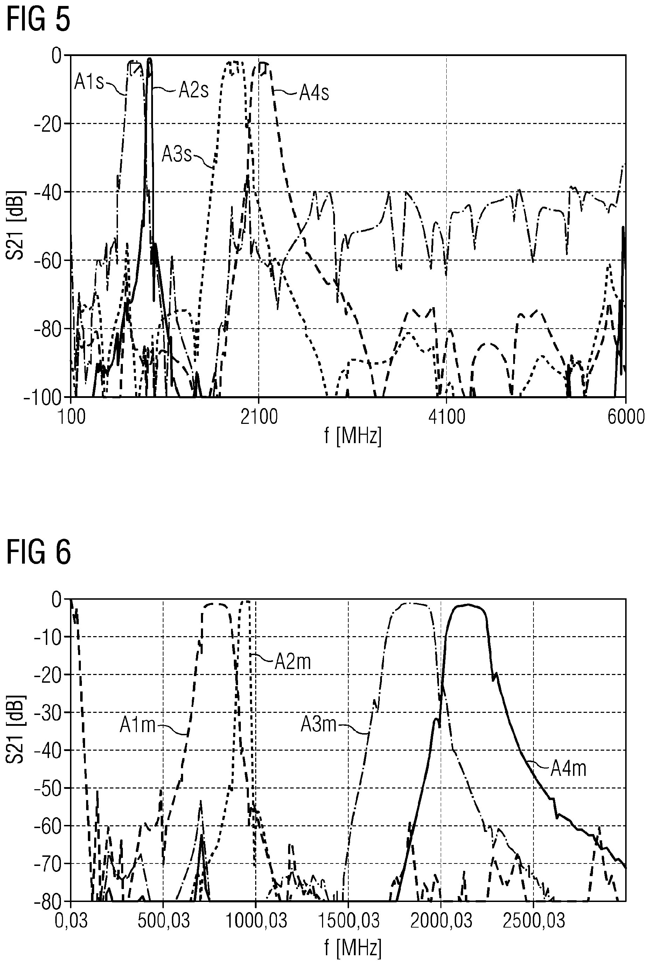

Fig. 5 zeigt simulierte Übertragungsfunktionen A1s-A4s der Signalpfade der Signale S1-S4 des erfindungsgemäßen Filters.

Fig. 6 zeigt gemessene Übertragungsfunktionen A1m-A4m der Signalpfade der Signale S1-S4 des erfindungsgemäßen Filters.

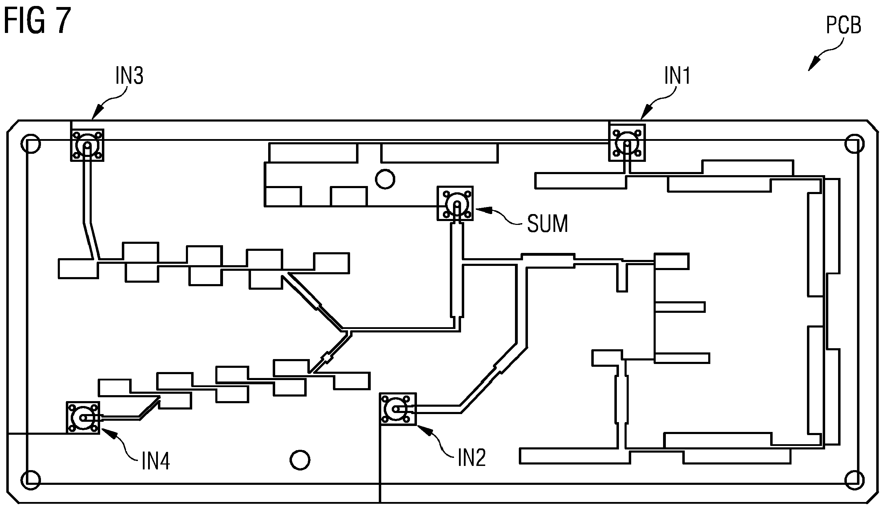

Fig. 7 stellt eine Aufsicht der Leiterplatte PCB mit Teilen des erfindungsgemäßen Filters dar.

Es sind Signalpfade der Signale S1-S4 des erfindungsgemäßen Filters erkennbar, welche von jeweiligen Signaleingängen IN1-IN4 zum Summenausgang SUM verlaufen.

Am Signaleingang IN2 wird das extern angeordnete zweite Filter BPF2 verbunden, an welches das zugeordnete Signal S2 angelegt wird.

Mithilfe der "stepped impedance Methode" sind planare Filter realisiert, mit welchen die Impedanzen der Bandpassfilter BPF1-BPF4 in den jeweils anderen Frequenzbereichen eine besonders günstige Kombination darstellt und eine "eindeutige Impedanz" im Sternpunkt des Filters erreicht wird.

Die Erfindung stellt daher nicht nur eine reine Zusammenschaltung von einzelnen Filtern dar, sondern eine synergistische Gesamtfilterwirkung, die für spezielle Anwendungen, wie in der Luftfahrt, besonders günstige Merkmale aufweist..

Die Verwendung des erfindungsgemäßen Filters in einer Luftfahrt-Funkeinrichtung ist besonders vorteilhaft, insbesondere wenn das Filter Funkeinrichtungen für Luftfahrt-Kommunikation wie VHF-, HF-Kommunikation oder ATC, sowie Satelliten-Kommunikation wie INMARSAT, Satellitennavigation wie GPS und Einrichtungen zum instrumentierten Fliegen wie VOR/VDL, GS, ILS, MB, TCAS/Mode S, ATC, ADF, DME miteinander kombiniert.

**Bezugszeichenliste:**

| BPF1-BPF4 | Bandpassfilter |
|---|---|
| C1, C2, CS | Kombinierer, Diplexer, Triplexer |
| f1-f4 | Signalfrequenz |
| IN1-IN4 | Signaleingang |
| PCB | Leiterplatte, Signalträgerplatte |
| S1f-S4f | Bandpass-gefiltertes Signal |
| S1-S4 | Eingangssignal |
| A1a-A4a | Transmissionsfunktion "high level" |
| Alfa, A1fb | Kombinations-Transmissionsfunktion |
| A1b-A4b | Transmissionsfunktion "low level" |
| A1s-A4s | Transmissionsfunktion, simuliert |
| A1m-A4m | Transmissionsfunktion, gemessen |
| ASC | Transmissionsfunktion Gesamtfilter |
| SC1, SC2, SC | kombiniertes Signal |
| SUM | Summen-Signalausgang |

**Patentansprüche**

1. Hochfrequenz-Filter, umfassend
   zumindest einen ersten Signal-Eingang (IN1) zum Empfang zumindest eines ersten Signals (S1) mit zumindest einer ersten Frequenz (f1),
   einen zweiten Signal-Eingang (IN2) zum Empfang eines zweiten Signals (S2) mit einer zweiten Frequenz (f2),
   und zumindest einen dritten Signal-Eingang (IN3, IN4) zum Empfang zumindest eines dritten Signals (S3, S4) mit zumindest einer dritten Frequenz (f3, f4), wobei die zweite Frequenz (f2) zwischen der zumindest einen ersten Frequenz (f1) und der zumindest einen dritten Frequenz (f3, f4) gelegen ist,
   und zumindest ein erstes Bandpassfilter (BPF1) zum Filtern des zumindest einen ersten Signals (S1), wobei zumindest ein gefiltertes erstes Signal (S1f) geformt wird,
und ein zweites Bandpassfilter (BPF2) zum Filtern des zweiten Signals (S2), wobei ein gefiltertes zweites Signal (S2f) geformt wird,
und zumindest ein drittes Bandpassfilter (BPF1, BPF4) zum Filtern des zumindest einen dritten Signals (S3, S4), wobei zumindest ein gefiltertes drittes Signal (S3f, S4f) geformt wird,
und das zweite Bandpassfilter (BPF2) in dessen Übertragungsfunktion eine Flankensteilheit im Sperrbereich aufweist, die zumindest doppelt so hoch ist, wie die Flankensteilheit im Sperrbereich in der Übertragungsfunktion des zumindest einen ersten und des zumindest einen dritten Bandpassfilters (BPF1, BPF3),
und zumindest eine erste Kombiniereinheit (C1) zum Kombinieren des gefilterten zumindest einen ersten und des zweiten Signals (S1f, S2f) zu einem ersten kombinierten Signal (SC1),
wobei die zumindest eine erste Kombiniereinheit (C1) ferner dazu eingerichtet ist, eine Tiefpassfilterung mit einer Durchlassfrequenz, welche die zumindest eine erste Frequenz umfasst, für das gefilterte zumindest eine erste Signal (S1f) und eine Hochpassfilterung mit einer Durchlassfrequenz, welche die zweite Frequenz umfasst, des gefilterten zweiten Signals (S2f) durchzuführen,
und zumindest eine weitere Summen-Kombiniereinheit (CS) zum Kombinieren des ersten kombinierten Signals (SC1) und des gefilterten zumindest einen dritten Signals (S3f, S4f) zu einem Summensignal (SC), welches an einen Summen-Signalausgang (SUM) geführt ist.

2. Filter nach dem vorhergehenden Anspruch, wobei zwischen dem zumindest einen ersten Bandpassfilter (BPF1) und dem zumindest einen dritten Bandpassfilter (BPF1, BPF4) eine elektromagnetische Kopplung vorliegt.

3. Filter nach einem der vorhergehenden Ansprüche, wobei das zumindest eine erste Filter (BPF1) und das zumindest eine dritte Filter (BPF3, BPF4) jeweils ein planares Filter sind, und das zweite Filter (BPF2) ein Cavity-Filter ist.

4. Filter nach dem vorhergehenden Anspruch, wobei das zumindest eine erste Filter (BPF1) und das zumindest eine dritte Filter (BPF3) auf demselben Schaltungsträger (PCB) angeordnet sind.

5. Filter nach einem der vorhergehenden Ansprüche, wobei die zweite Frequenz (f2) 40% - 60% der zumindest einen dritten Frequenz (f3, f4) umfasst, bevorzugt 50%.

6. Verwendung des Filters nach einem der vorhergehenden Ansprüche in einer Luftfahrt-Funkeinrichtung.

7. Verwendung des Filters nach dem vorhergehenden Anspruch, wobei das Filter Funkeinrichtungen für Luftfahrt-Kommunikation, Satellitennavigation und Einrichtungen zum instrumentierten Fliegen miteinander kombiniert.

## FIG 1

## FIG 2

FIG 3

FIG 4

FIG 5

FIG 6

FIG 7

Europäisches
Patentamt

European
Patent Office

Office européen
des brevets

# EUROPÄISCHER RECHERCHENBERICHT

Nummer der Anmeldung

EP 21 16 9233

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 671 947 A1 (ATOS CONVERGENCE CREATORS GMBH [AT]) 24. Juni 2020 (2020-06-24) <br> * Absatz [0019] - Absatz [0031] * <br> * Abbildung 1 * <br> ----- | 1-7 | INV. <br> H04B1/00 <br> H01P1/213 |
| A | DE 11 2010 001932 T5 (MURATA MANUFACTURING CO [JP]) 8. November 2012 (2012-11-08) <br> * Absatz [0031] * <br> * Absatz [0034] * <br> * Abbildung 1 * <br> ----- | 1-7 | |
| A | KR 2018 0000641 U (WALSIN TECHNOLOGY CORP) 7. März 2018 (2018-03-07) <br> * Absatz [0010] * <br> * Absatz [0012] * <br> * Absatz [0017] * <br> * Abbildung 1 * <br> ----- | 1-7 | |
| A | CN 106 848 516 A (UNIV SOUTH CHINA TECH) 13. Juni 2017 (2017-06-13) <br> * Absatz [0009] * <br> * Absatz [0027] * <br> * Abbildung 1 * <br> ----- <br> -/-- | 1-7 | |

RECHERCHIERTE SACHGEBIETE (IPC)

H01P
H04B

Der vorliegende Recherchenbericht wurde für alle Patentansprüche erstellt

| Recherchenort | Abschlußdatum der Recherche | Prüfer |
|---|---|---|
| Den Haag | 30. September 2021 | Culhaoglu, Ali |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

Europäisches Patentamt
European Patent Office
Office européen des brevets

**EUROPÄISCHER RECHERCHENBERICHT**

Nummer der Anmeldung

EP 21 16 9233

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | SIEMENS AG: "Draft - PWI_MSGTFES_1723_v4 v (EN 302 480 ) MCOBA / NCU HS", ETSI DRAFT; TFES(17)057009R3, EUROPEAN TELECOMMUNICATIONS STANDARDS INSTITUTE (ETSI), 650, ROUTE DES LUCIOLES ; F-06921 SOPHIA-ANTIPOLIS ; FRANCE , Nr. 2.1.5 6. September 2017 (2017-09-06), Seiten 1-55, XP014299184, Gefunden im Internet: URL:docbox.etsi.org\MSG\TFES\05-CONTRIBUTIONS\2017\TFES(17)057009r3_Draft_-_PWI_MSGTFES_1723_v4_v_EN_302_480___MCOBA___NCU_HS\PWI_MSGTFES_1723_v221_215.docx [gefunden am 2017-09-06] * Tabellen 4.2.5.3.2-1 * ----- | 1-7 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 30. September 2021 | Culhaoglu, Ali |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 16 9233

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-09-2021

| Im Recherchenbericht angeführtes Patentdokument | Datum der Veröffentlichung | Mitglied(er) der Patentfamilie | Datum der Veröffentlichung |
|---|---|---|---|
| EP 3671947 A1 | 24-06-2020 | EP 3671947 A1<br>EP 3672087 A1 | 24-06-2020<br>24-06-2020 |
| DE 112010001932 T5 | 08-11-2012 | CN 102804599 A<br>DE 112010001932 T5<br>JP 5234182 B2<br>JP WO2010147197 A1<br>US 2012087285 A1<br>WO 2010147197 A1 | 28-11-2012<br>08-11-2012<br>10-07-2013<br>06-12-2012<br>12-04-2012<br>23-12-2010 |
| KR 20180000641 U | 07-03-2018 | KEINE | |
| CN 106848516 A | 13-06-2017 | KEINE | |

EPO FORM P0461

Für nähere Einzelheiten zu diesem Anhang : siehe Amtsblatt des Europäischen Patentamts, Nr.12/82